# EUROPEAN PATENT SPECIFICATION

(11) **EP 3 785 949 B1**
(45) Date of publication and mention of the grant of the patent: **11.11.2026**
(21) Application number: 20192737.3
(22) Date of filing: 25.08.2020
(51) Int. Cl.: B60G 3/14, B60K 7/00

(54) **HEAVY VEHICLE**
SCHWERES FAHRZEUG
VÉHICULE LOURD

(30) Priority: 29.08.2019 IT 201900015213
(43) Date of publication of application: 03.03.2021
(73) Proprietor: Iveco S.p.A., 10156 Torino (IT)
(72) Inventor: FEUTRIE, Arnaud, 69370 SAINT DIDIER AU MONT D'OR (FR); PEREIRA DE LEMOS, Josè Francivaldo, SETE LAGOAS MG (BR); BERNARDINI, Alessandro, 16123 GENOVA (IT); CALAON, Ivan, 10125 TORINO (IT)
(74) Representative: Studio Torta S.p.A.

(56) References cited:
- EP-A1- 2 815 905
- EP-A2- 1 350 644
- EP-A2- 1 894 762
- WO-A1-2012/123175
- WO-A1-2016/110823
- WO-A1-2017/148692
- WO-A1-2017/172788
- DE-U1- 202015 102 551
- FR-A1- 2 726 230
- KR-B1- 101 887 875
- US-A1- 2008 018 064

## Description

### TECHNICAL FIELD

The invention relates to a heavy vehicle comprising two driving assemblies, in particular two purely electric driving assemblies.

### BACKGROUND ART

Heavy vehicles, such as trucks, trailer trucks, buses and the like, are provided with a front driver's cabin and with one or more rear compartments for the transportation of goods or passengers, depending on the application.

The rear compartments are usually supported by a lower body portion, also known as bottom of the vehicle.

The bottom, in turn, is supported, by means of a series of suspensions, by a plurality of axles, which each carry two or more aligned wheels and fulfil the function of the transmitting the load of the compartments and of the bottom to the wheels.

In some cases, at least one of the axles contributes in driving the vehicle and, therefore, is provided with an automotive differential, whose input is connected to a power drive of the vehicle.

Furthermore, the axle is provided with two axle shafts, which are connected to the outputs of the differential and to the wheels respectively.

Each one of the axles with a driving function extends between the wheels under the bottom of the vehicle, so that it can follow the movements of the suspensions without interfering with the bottom.

Therefore, the space taken up by the axles leads to a necessary raising of the bottom of the vehicle from the ground.

On the other hand, though, a decrease in the height of the vehicle from the ground leads to better performances of the suspensions.

Furthermore, a reduced height from ground allows for a decrease in the total dimensions of the vehicle, thus leading to the chance of increasing the transportation capacity of the vehicle, for example by increasing the capacity of the compartments.

Within the state of the art, documents EP1894762A2 and EP2815905A1 disclose suspension arms housing electric motors. However, those documents provide no teachings about the height of vehicles.

Other known arrangements are disclosed in patent publications WO2016110823 A1, WO2017148692 A1, US20080018064 A1, WO2017172788 A1, WO 2012/123175 A1, DE202015102551,

FR2726230 A1, KR101887875 A or EP1350644 A1.

Document DE 20 2015 102551 U1 discloses a heavy vehicle comprising a frame having a front portion and a rear portion according to a forward direction of the heavy vehicle. The rear portion extends along a straight axis oriented along the forward direction. The heavy vehicle further comprises a cabin supported by the front portion. A load compartment configured to contain loads to be transported is supported from the bottom by the rear portion and has a horizontal floor extending along the straight axis above the rear portion and coupled to the rear portion. The heavy vehicle further comprises a pair of wheel hubs, two rear wheels and two drive assemblies coupling the two rear wheels to the rear portion. Each drive assembly comprises a suspension arm suitable for being coupled to the frame of the heavy vehicle. The rear portion comprises a central structure extending along the straight axis and structural appendices projecting from the central structure transversally with respect to the straight axis, one on an opposite side of the central structure with respect to the other. Each drive assembly is coupled directly to the respective structural appendices, thereby being spaced apart from the central structure transversally to the axis and being positioned at the same height level as or at a higher level than the central structure.

Therefore, the need is felt to reduce the height of vehicles from the ground, though without causing any type of interference between the axle shafts and the bottom.

Furthermore, more in general, the needs are felt to reduce the dimensions of known axles and to make simpler the structure of the vehicle, though maintaining the sturdiness and reliability thereof.

The object of the invention is to fulfil at least one of the needs discussed above in a simple and economic fashion.

### SUMMARY OF THE INVENTION

The aforesaid object is reached by a heavy vehicle according to the appended claims.

### BRIEF DESCRIPTION OF THE DRAWINGS

The invention will be best understood upon perusal of the following detailed description of embodiments thereof, which are provided by way of non-limiting example, with reference to the accompanying drawings, wherein:
- figure 1 is a perspective view, with parts removed for greater clarity, of a heavy vehicle comprising a driving assembly according to an embodiment of the invention;
- figure 2 is a further perspective view showing, from the bottom and on a larger scale, a detail of the heavy vehicle of figure 1;
- figure 3 shows the driving assembly on a further larger scale and according to a different perspective;
- figure 4 is a side view, with sectional parts, of the driving assembly of figure 3; and
- figure 5 is similar to figure 4 and shows a driving assembly according to a further embodiment of the invention.

### DETAILED DESCRIPTION OF THE INVENTION

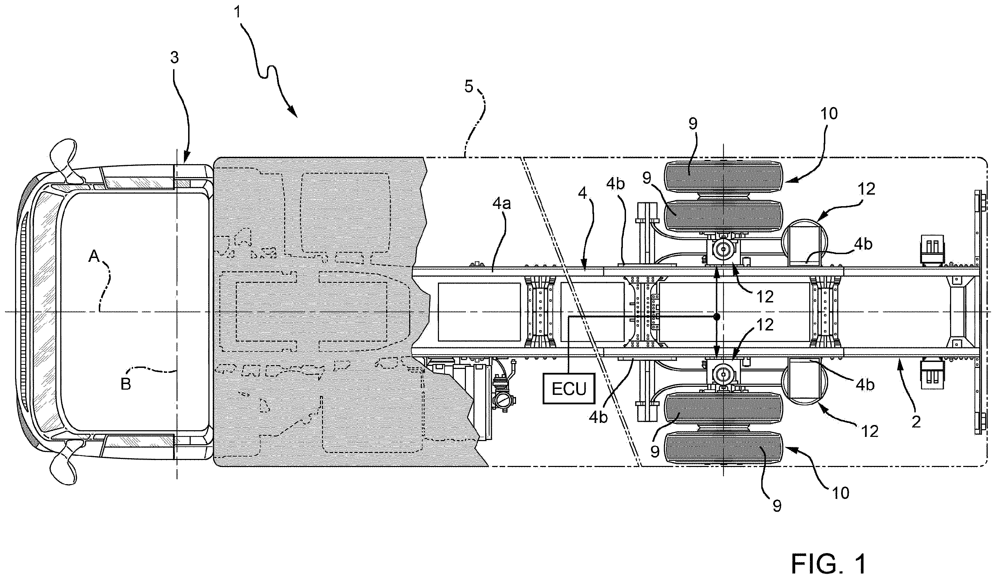

In figure 1, reference number 1 indicates a heavy vehicle, in particular a truck for the transportation of goods.

The vehicle 1 comprises a frame 2 having, according to a forward direction of the vehicle 1 in use, a front portion 3 defining a driver's cabin and a rear portion 4.

The rear portion 4 extends along a straight axis A, which is oriented along the forward direction of the vehicle 1. The rear portion 4 further supports, from the bottom, a load compartment 5 of the vehicle 1 to contain the goods to be transported.

The load compartment 5 has a horizontal floor, which extends along the axis A above the rear portion 4 and is coupled to the latter, in particular in a direct manner.

Furthermore, the vehicle 1 comprises a front axle (not shown) of a known kind and not described in detail, which is arranged under the front portion 3 and is coupled to the latter by means of a known suspension (not shown).

The vehicle 1 also comprises two pairs of front wheels (not shown), which are coaxial to one another and are respectively arranged on opposite sides of the front portion 3 relative to the axis A.

The pairs of front wheels are aligned with one another along an axis B, which is orthogonal to the axis A, and are fixed to the front axle. Together with the front axle, the pairs of front wheels support the front portion 3.

The vehicle 1 further comprises two pairs of rear wheels 10 and two driving assemblies 12, which couple the two pairs of wheels 10, respectively, to the front portion 4.

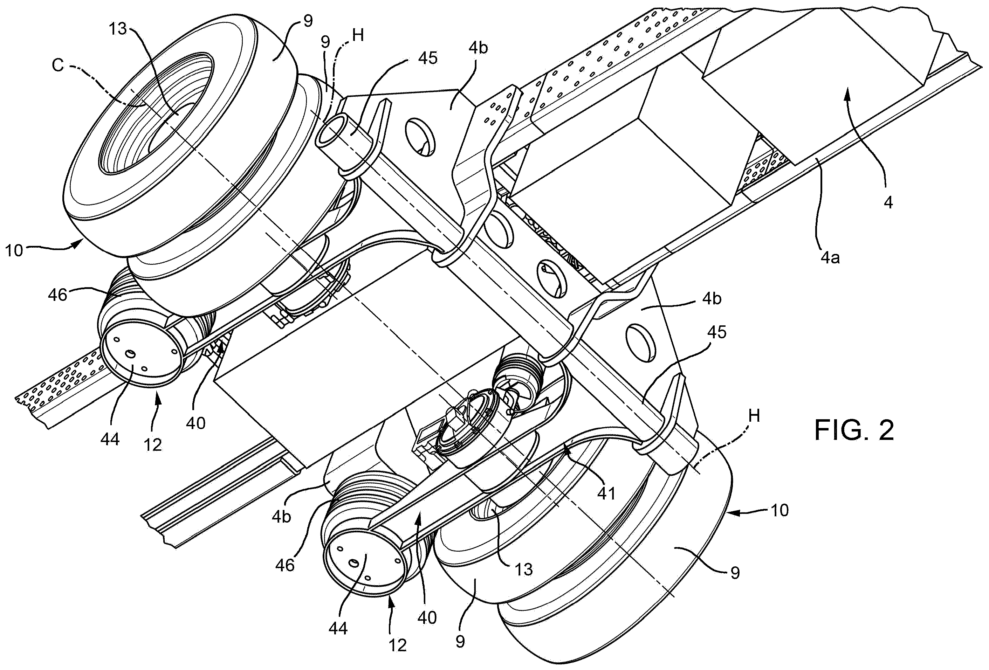

More in detail, according to figure 2, the rear portion 4 comprises a central structure 4a along the axis A and a plurality of structural appendices 4b, which extend crosswise relative to the axis A, namely on the opposite sides of the central structure 4a.

In other words, the structural appendices 4b laterally project from the central structure 4a, namely according to a direction that is transverse, more precisely orthogonal, to the axis A.

In particular, the structural appendices 4b comprise a plurality of plates connected to one another. The central structure 4a supports the load compartment 5 and the floor thereof.

The driving assemblies 12 are coupled to the structural appendices 4b, in particular in a direct manner, and are spaced apart from the central structure 4a according to a direction that is transverse to the axis A, namely they are arranged on the sides relative to the central structure 4a. In other words, the central structure 4a extends between the driving assemblies 12.

In yet other words, the driving assemblies 12 include at least respective portions arranged at least at the same height level as the central portion 4a or at a higher height level.

Hence, the pairs of wheels 10 and the driving assemblies 12 support the rear portion 4 and the load compartment 5.

Each pair of wheels 10 comprises a relative wheel hub 13 (figure 2), which is coupled to a corresponding one of the driving assemblies 12 and coaxially carries two tyres 9.

The wheel hub 13 is known and, therefore, is not further described in detail. If necessary, the wheel hub 13 can introduce a fixed or variable transmission ratio between the relative driving assembly 12 and the tyres 9. An example of a wheel hub introducing a variable transmission ratio is described, in particular, in WO2016110823A1.

In figure 1, the pairs of wheels 10 are aligned with one another along an axis C, which is parallel to the axis B; furthermore, according to the embodiment shown in figure 1, the driving assemblies 12 are identical.

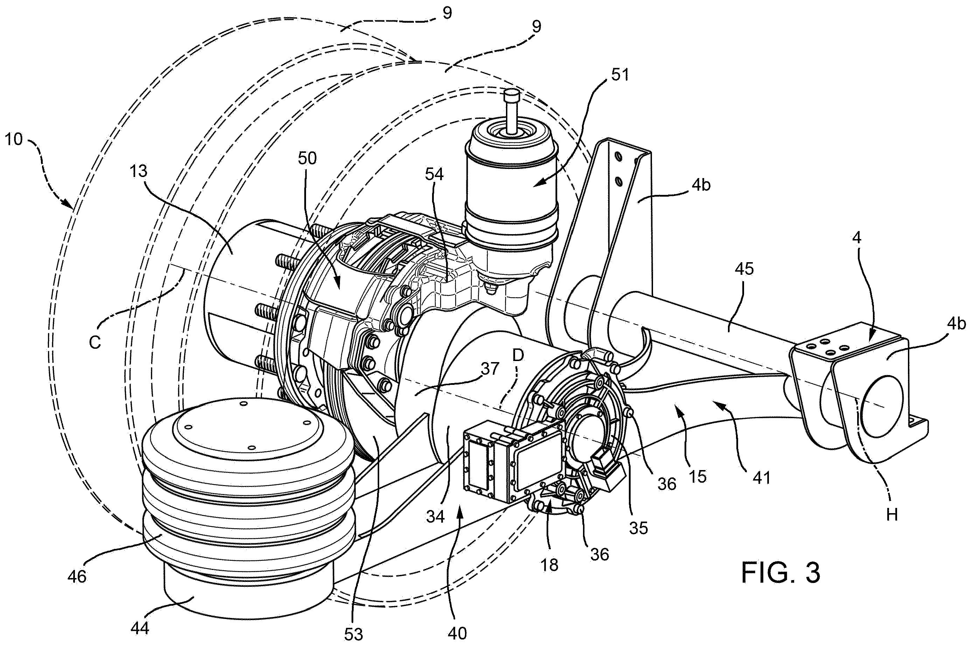

Therefore, with reference to figure 3, only one of the driving assemblies 12 will be described more in detail below.

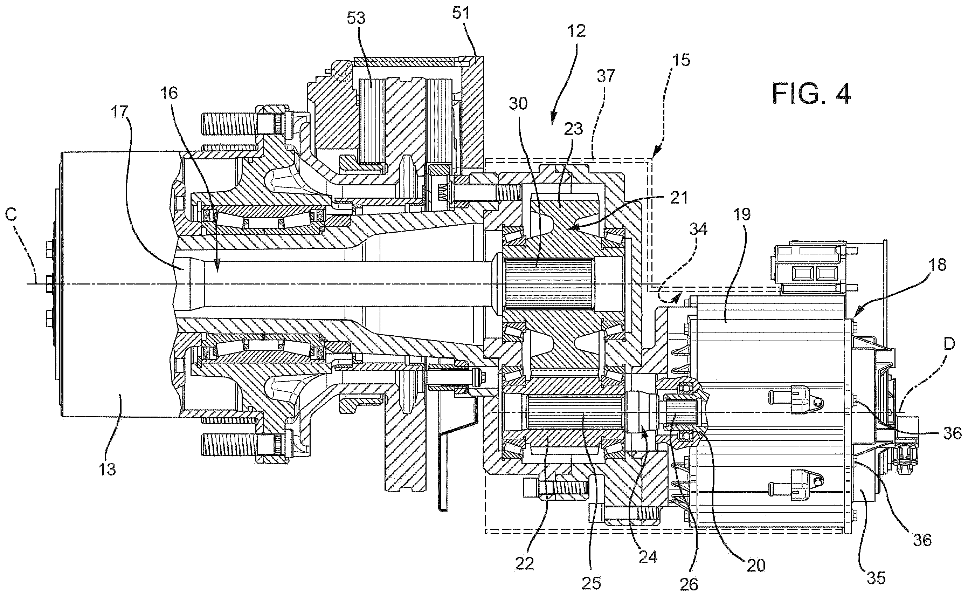

The driving assembly 12 comprises:
- a suspension arm 15 coupled to the frame 2;
- a shaft 16 (figure 4), which is carried by the suspension arm 15, in a rotatable manner about the axis C, and is provided with an end 17 connected to the wheel hub 13; and
- an electric motor 18, which has a stator 19 carried in a fixed position by the suspension arm 15 and a rotor 20 coupled to the shaft 16 for driving the latter in rotation about the axis C.

For clarity reasons, as one clearly and unequivocally derives from figures 3 and 4, the expression "carried in a fixed position" herein means "rigidly coupled", namely the entire pose, i.e. the position and the orientation, of the stator 19 is fixed relative to the suspension arm 15. In other words, this means that the stator 19 entirely moves in an integral manner together with the suspension arm 15. This means that the expression "carried in a fixed position" excludes relative translations and rotations between the stator 19 and the suspension arm 15.

More in detail, the stator 19 and the rotor 20 are coaxial to one another around an axis D, which preferably is parallel to the axis C. Clearly, the axis D is completely fixed with respect to the suspension arm 15.

More precisely, the driving assembly 12 comprises a transmission 21, which couples the shaft 16 to the rotor 20 so that the rotation motion of the rotor 20 around the axis D is transmitted to the shaft 16 around the axis C.

In particular, the transmission 21 is a gear transmission, for example an ordinary reduction gear according to figure 4.

In figure 4, the ordinary reduction gear has one single reduction stage, namely a pair of gears 22, 23 and an input shaft 24, which extends along the axis D between two ends 25, 26, which are connected to the gear 22 and to the rotor 20 respectively.

The shaft 16 has a further end 30, which is opposite the end 17 along the axis C and is connected to the gear 23, so as to define an output of the ordinary reduction gear.

According to figure 4, the gears 22, 23 are cylindrical, so that the ordinary reduction gear is of the type having parallel axes, which coincide with the axes C, D.

The suspension arm 15 comprises a hollow portion 34, which at least partially houses the motor 18. More specifically, the hollow portion 34 completely houses the rotor 20 and, conveniently, also the stator 19. In particular, the motor 18 comprises a connection portion 35, in particular a flange connection portion, which is fixed relative to the stator 19, for example since it is manufactured as one single piece together with the stator 19, projects along the axis D relative to the hollow portion 34 and is rigidly fixed to the latter, for example by means of threaded elements 36.

According to figure 3, the hollow portion 34 has a cylindrical shape and is arranged around the axis D.

Furthermore, the suspension arm 15 preferably comprises a further hollow portion 37, which is arranged between the wheel hub 13 and the hollow portion 34, is fixed relative to the hollow portion 34 and at least partially houses the transmission 21. In particular, the transmission 21 is entirely housed inside the hollow portion 37.

The hollow portions 34, 37 define respective inner volumes communicating with one another and are preferably manufactured as one single piece, so as to define one single hollow portion.

According to figure 3, the hollow portion 37 has an oval shape and is ideally crossed by both axes C, D.

Furthermore, the suspension arm 15 comprises two arm portions 40, 41 (figure 3), which extend from the hollow portion 34 in a manner transversal to the axis D, in particular according to respective directions that are aligned with and opposite one another, so that the hollow portion 34 and, if present, the hollow portion 37 define an intermediate portion of the suspension arm 15.

More specifically, the directions of extension of the arm portions 40, 41 ideally lie on a plane that is perpendicular to the one on which the axes C, D ideally lie. Practically, when the vehicle 1 is standing still, the axes C, D are vertically arranged above one another, whereas the extension directions of the arm portions 40, 41 are aligned with one another and substantially horizontal.

The arm portions 40, 41 have respective ends 44, 45, which are opposite one another relative to the hollow portion 34 and are respectively coupled to the rear portion 4, specifically to two of the structural appendices 4b.

In particular, the driving assembly 12 comprises at least one elastically deformable element 46, for example an air spring like in figure 3, which couples the end 44 to the rear portion 4 in an elastically yielding manner. More in particular, the elastically deformable element 46 is fixed to the end 44 and to a respective one of the two appendices 4b (figure 2).

Furthermore, according to figure 3, the end 45 extends along a hinge axis H, in particular parallel to the axis D, and is coupled to the other one of the two appendices 4b.

Specifically, the end 45 is hinged to the respective appendix 4b, namely to the rear portion 4, around the hinge axis H. In this way, the end 45 can rotate around the hinge axis H relative to the rear portion 4.

Alternatively, the end 45 is fixed to the respective appendix 4b, namely to the rear portion 4, and is elastically deformable through torsion around the hinge axis H. In this way, the latter defines a virtual hinge axis and the end 45 defines a torsion bar.

Conveniently, the suspension arm 15 could be manufactured as one single piece and/or comprise a metal material, for example steel or aluminium.

Preferably, according to figure 3, the driving assembly 12 further comprises a brake caliper device 50, for example of a known type, and an attachment member 51 to attach a damping device (not shown), for example of a known type. The brake caliper device 50 and the attachment member 51 are carried by the hollow portion 37 in a fixed position.

The brake caliper device 50 is configured to operatively cooperate with a brake disc 53, which is part of the relative wheel hub 13.

Conveniently, the driving assembly 12 also comprises the aforesaid damping device attached to the attachment member 51 and coupled to the rear portion 4 so as to damp, in use, the vibrations caused by the contact between the pairs of wheels 10 and the road.

According to figure 3, the driving assembly further comprises a base 54, which is carried by the hollow portion 37 and to which the brake caliper device 50 and the attachment member 51 are both coupled in a fixed position.

Furthermore, the vehicle 1 comprises a control unit ECU (figure 1), which is electrically coupled to each motor 18 of each driving assembly 12 and is configured to independently control the rotations of the relative rotors 20 and, as a consequence, the rotations of the wheel hubs 13.

The embodiment of the vehicle 1 described above works as follows.

When the vehicle 1 is moving forward, each pair of wheels 10 is caused to rotate by means of the relative driving assembly 12, which causes the rotation of the wheel hub 13. The motor 18 delivers a torque, which is transmitted to the shaft 16, which is connected to the wheel hub 13, by means of the transmission 21.

In particular, the rotation of the rotor 20 is directly transmitted to the input shaft 24 and, hence, to the gear 25, which meshes with the gear 26 so that the shaft 16 rotates at a speed that is different from the one of the input shaft 24, according to a constant transmission ratio.

When the vehicle 1 drives along a bend, the control unit ECU controls the respective motors 18 so that they deliver different torques. More in detail, the delivered torques are such that the angular speeds of the shafts 16 are different from one another and are suited to make sure that the pairs of wheels 10 have an ideal grip to the road. By so doing, an automotive differential is no longer needed.

Furthermore, when the vehicle 1 is moving forward, each pair of wheels 10 follows the conformation of the road and the relative suspension arm 15 moves accordingly; in particular, the end 45 rotates around the hinge axis H and the end 44 moves deforming the elastically deformable element 46. At the same time, the damping device attached to the attachment member 51 dissipates the kinetic energy transferred by the pair of wheels 10 to the driving assembly 12.

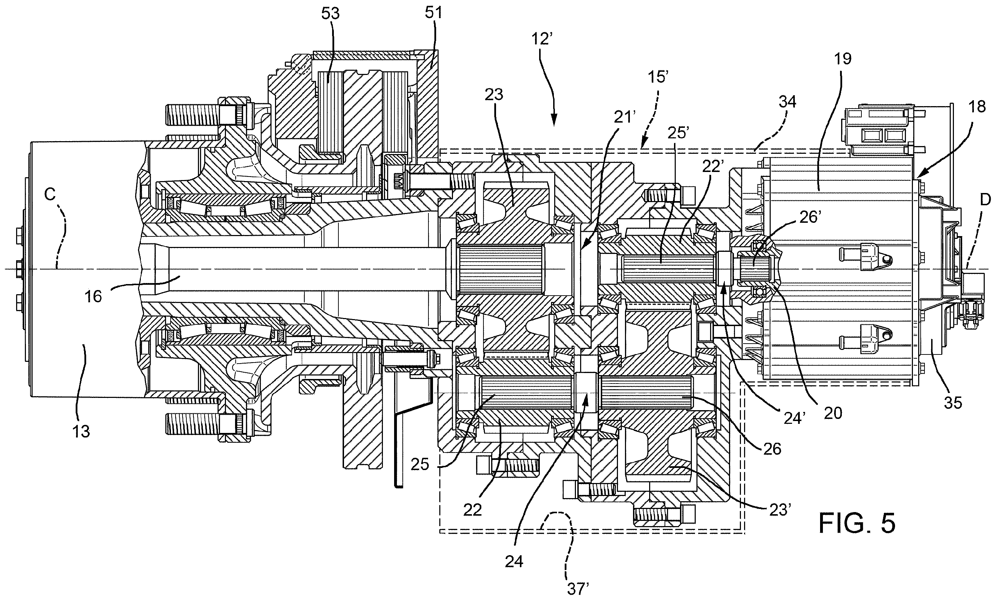

With reference to figure 5, reference number 12' indicates a driving assembly according to a further embodiment of the invention.

The driver assembly 12' is similar to the driver assembly 12 and will be described below only with reference to those aspects that distinguish the former from the latter; corresponding or equivalent parts of the driving assemblies 12, 12' will be indicated, when possible, with the same reference numbers.

In particular, the driving assembly 12' differs from the driving assembly 12 in that the former comprises a transmission 21' instead of the transmission 21 to couple the shaft 16 to the rotor 20. The rotor 20 is arranged around an axis D', which is aligned with the axis C, so that the shaft 16 and the rotor 20 are coaxial.

The transmission 21' is a gear transmission, in particular an ordinary reduction gear with two reduction stages. Besides the gears 22, 23 and the input shaft 24 along the axis D', the transmission 21' also comprises a further pair of gears 22', 23' and a further input shaft 24', which extends along the axis D' between two ends 25', 26', which are connected to the gear 22' and to the rotor 20 respectively. Here, the end 26 of the input shaft 24 is connected to the gear 23' instead of being connected to the rotor 20.

Furthermore, the driving assembly 12' comprises a suspension arm 15', which differs from the arm 15 only in that it comprises a hollow portion 37' instead of the hollow portion 37. The hollow portion 37' houses the entire transmission 21' and preferably consists of two hollow portions 37 arranged in adjacent positions along the axis C and upside-down relative to one another.

Owing to the above, the advantages of the driving assemblies 12, 12' according to the invention are evident.

Each driving assembly 12, 12' is capable of causing, on its own, the rotation of the relative wheel hub 13 with a minimum number of components, which also allow for the transmission of the operating loads of the vehicle 1 between the frame 2 and a pair of wheels 10.

Each driving assembly 12, 12' is laterally spaced apart from the central structure 4a, which supports the floor of the load compartment 5. In this way, the floor can be closer to the ground, as well as the entire rear portion 4. This leads to a significant increase in the loading capacity of the vehicle 1 and in the overall performances of the suspensions thereof, without interferences between the driving assemblies 12, 12' and the frame 2.

The suspension arms 15, 15' have constructive features that are particularly advantageous from the point of view of compactness, manufacturing simplicity and sturdiness. The motor 18 is very well supported by the relative suspension arm 15 or 15', which houses at least the rotor 20 thereof. The suspension arms 15, 15' respectively also house the transmissions 21, 21', which permit through the definition of relative transmission ratios an increase in the torque delivered to the wheel hubs 13.

Furthermore, the suspension arms 15, 15' can effectively carry components such as the brake caliper device 50 or the attachment member 51, thus leading to a better organization of the total dimensions of the vehicle 1.

Thanks to the control unit ECU, the motors 18 can be controlled in an independent manner; the use of automotive differentials can be avoided in the vehicle 1.

Finally, the driving assemblies 12, 12' according to the invention can be subjected to changes and variants, which, though, do not go beyond the scope of protection set forth in the claims.

In particular, the pairs of wheels 10 and/or the pairs of wheels 7 could respectively be replaced by single wheels, each having its own wheel hub.

The geometry of the transmission arms 15, 15' could be different from the one described and shown herein. For example, there could be a single one of the two arm portions 40, 41 or there could be further arm portions in addition to the arm portions 40, 41.

Furthermore, the elastically deformable element 46 could be arranged in a different position relative to the suspension arms 15, 15'. Similarly, the brake caliper device 50 and the attachment member 51 could be carried by different portions of the suspension arms 15, 15', for example by the hollow portion 34. Finally, the driving assemblies 12, 12' could be applied for the front-wheel drive of the vehicle 1, namely to support the front portion 3.

## Claims

1. A heavy vehicle (1) comprising:
- a frame (2) having a front portion (3) and a rear portion (4), according to a forward direction of the heavy vehicle (1), wherein the rear portion (4) extends along a straight axis (A) oriented along the forward direction;
- a cabin defined by said front portion (3);
- a load compartment (5) configured to contain loads to be transported supported from the bottom by the rear portion (4) and having a horizontal floor which extends along the straight axis (A) above the rear portion (4) and is coupled to the rear portion (4);
- a pair of wheel-hubs (13); and
- two pairs of rear wheels (10) and two drive assemblies (12), which couple at least two rear wheels (10) of said two pairs of rear wheels, respectively, to said rear portion (4), each drive assembly (12, 12') comprising:
- a suspension arm (15, 15') suitable for being coupled to said frame (2) of said heavy vehicle (1);
- a shaft (16) carried by said suspension arm (15, 15') in a rotatable manner about an axis (C) thereof, and having an axial end (17) to be connected to a respective wheel-hub (13); and
- an electric motor (18) having a stator portion (19), which is carried in a fixed position by said suspension arm (15; 15'), and a rotor portion (20), which is coupled to said shaft (16) for driving said shaft (16) in rotation about said axis (C), wherein said wheel-hub (13) is fitted on said shaft (16), said rotor portion (20) has a rotor axis (D; D') parallel to said axis (C) and said suspension arm (15, 15') comprises a hollow portion (34, 37; 37') that houses said motor (18) at least partially and is coupled to said frame (2);
wherein said rear portion (4) comprises :
- a central structure (4a) which extends along the straight axis (A), and
- structural appendices (4b) projecting from said central structure (4a) transversally with respect to said straight axis (A) one on opposite side of said central structure (4a) with respect to the other,
wherein said each drive assemblies (12, 12') is coupled to the respective structural appendices (4b) in a direct manner thereby being spaced apart from said central structure (4a) transversally to said axis (A) and being positioned at the same height level or at a higher level with respect to said central structure (4a),
wherein said hollow portion (34, 37; 37') defines an intermediate portion of said suspension arm (15, 15'), which comprises a first and a second end portion (44, 45) opposite to one another with respect to said intermediate portion (34) and respectively suitable for being coupled to said frame (2).

2. The heavy vehicle according to claim 1, wherein said rotor portion (20) is entirely arranged inside said hollow portion (34, 37; 37').

3. The heavy vehicle according to claim 1 or 2, wherein said drive assembly comprises at least an elastic connection member (46) connected to said first end (44) and connectable to said frame (2) for coupling said first end (44) to said frame (2).

4. The heavy vehicle according to claim any of the preceding claims, wherein said second end (45) extends about a hinge axis (H); said second end (45) being hingeable to said frame (2) about said hinge axis (H) or defining an elastic torsion bar fixable to said frame (2);
said hinge axis (H) being preferably directed transversally with respect to a forward direction of said heavy vehicle (1) when said second end (45) is coupled to said frame (2).

5. The heavy vehicle according to any one of the preceding claims, further comprising a brake caliper device (50) and/or an attachment member (51) for attaching a damping device at least partially supported by said hollow portion (34, 37; 37').

6. The heavy vehicle according to any one of the preceding claims, further comprising a transmission (21, 21'), in particular with gears, which is entirely housed inside said hollow portion (34, 37; 37') and couples said shaft (16) to said rotor portion (20).

## Patentansprüche

1. Schwerlastfahrzeug (1), umfassend:
- einen Rahmen (2) mit einem vorderen Abschnitt (3) und einem hinteren Abschnitt (4) gemäß einer Vorwärtsrichtung des Schwerlastfahrzeugs (1), wobei sich der hintere Abschnitt (4) entlang einer geraden Achse (A) erstreckt, die entlang der Vorwärtsrichtung ausgerichtet ist;
- eine Kabine, die durch den vorderen Abschnitt (3) definiert ist;
- einen Laderaum (5), der konfiguriert ist, um zu transportierende Lasten aufzunehmen, die von unten durch den hinteren Abschnitt (4) getragen werden, und der einen horizontalen Boden aufweist, der sich entlang der geraden Achse (A) über dem hinteren Abschnitt (4) erstreckt und mit dem hinteren Abschnitt (4) gekoppelt ist;
- ein Paar Radnaben (13); und
- zwei Paare von Hinterrädern (10) und zwei Antriebsanordnungen (12), die mindestens zwei Hinterräder (10) der zwei Paare Hinterräder jeweils mit dem hinteren Abschnitt (4) koppeln,
wobei jede Antriebsanordnung (12, 12') umfasst:
- einen Aufhängungsarm (15, 15'), der geeignet ist, um mit dem Rahmen (2) des Schwerlastfahrzeugs (1) gekoppelt zu werden;
- eine Welle (16), die durch den Aufhängungsarm (15, 15') in einer drehbaren Weise um eine Achse (C) davon getragen wird und ein axiales Ende (17) aufweist, um mit einer jeweiligen Radnabe (13) verbunden zu werden; und
- einen Elektromotor (18) mit einem Statorabschnitt (19), der in einer festen Position durch den Aufhängungsarm (15; 15') getragen wird, und einem Rotorabschnitt (20), der mit der Welle (16) gekoppelt ist, um die Welle (16) in Drehung um die Achse (C) anzutreiben, wobei die Radnabe (13) auf die Welle (16) gepasst ist, der Rotorabschnitt (20) eine Rotorachse (D; D') parallel zu der Achse (C) aufweist und der Aufhängungsarm (15, 15') einen hohlen Abschnitt (34, 37; 37') umfasst, der den Motor (18) mindestens teilweise aufnimmt und mit dem Rahmen (2) gekoppelt ist;
wobei der hintere Abschnitt (4) umfasst:
- eine zentrale Struktur (4a), die sich entlang der geraden Achse (A) erstreckt, und
- strukturelle Anhänge (4b), die von der zentralen Struktur (4a) quer in Bezug auf die gerade Achse (A) vorstehen, nämlich einer auf gegenüberliegenden Seiten der zentralen Struktur (4a) in Bezug auf den anderen,
wobei jede Antriebsanordnung (12, 12') mit den jeweiligen strukturellen Anhängen (4b) in einer direkten Weise gekoppelt ist, wodurch sie von der zentralen Struktur (4a) quer zu der Achse (A) beabstandet ist und auf demselben Höhenniveau oder auf einem höheren Niveau als die zentrale Struktur (4a) positioniert ist,
wobei der hohle Abschnitt (34, 37; 37') einen Zwischenabschnitt des Aufhängungsarms (15, 15') definiert, der einen ersten und einen zweiten Endabschnitt (44, 45) umfasst, die einander in Bezug auf den Zwischenabschnitt (34) gegenüberliegen und jeweils geeignet sind, um mit dem Rahmen (2) gekoppelt zu werden.

2. Schwerlastfahrzeug nach Anspruch 1, wobei der Rotorabschnitt (20) vollständig innerhalb des hohlen Abschnitts (34, 37; 37') angeordnet ist.

3. Schwerlastfahrzeug nach Anspruch 1 oder 2, wobei die Antriebsanordnung mindestens ein elastisches Verbindungselement (46) umfasst, das mit dem ersten Ende (44) verbunden ist und mit dem Rahmen (2) zum Koppeln des ersten Endes (44) mit dem Rahmen (2) verbindbar ist.

4. Schwerlastfahrzeug nach einem der vorhergehenden Ansprüche, wobei sich das zweite Ende (45) um eine Scharnierachse (H) erstreckt; wobei das zweite Ende (45) an dem Rahmen (2) um die Scharnierachse (H) angelenkt werden kann oder einen elastischen Torsionsstab definiert, der an dem Rahmen (2) fixierbar ist;
wobei die Scharnierachse (H) vorzugsweise quer zu einer Vorwärtsrichtung des Schwerlastfahrzeugs (1) ausgerichtet ist, wenn das zweite Ende (45) mit dem Rahmen (2) gekoppelt ist.

5. Schwerlastfahrzeug nach einem der vorhergehenden Ansprüche, ferner umfassend eine Bremssattelvorrichtung (50) und/oder ein Befestigungselement (51) zum Befestigen einer Dämpfungsvorrichtung, die mindestens teilweise von dem hohlen Abschnitt (34, 37; 37') getragen wird.

6. Schwerlastfahrzeug nach einem der vorhergehenden Ansprüche, ferner umfassend ein Getriebe (21, 21'), insbesondere mit Zahnrädern, das vollständig innerhalb des hohlen Abschnitts (34, 37; 37') untergebracht ist und die Welle (16) mit dem Rotorabschnitt (20) koppelt.

## Revendications

1. Véhicule lourd (1) comprenant :
- un châssis (2) comportant une partie avant (3) et une partie arrière (4), selon une direction vers l'avant du véhicule lourd (1), la partie arrière (4) s'étendant le long d'un axe (A) droit orienté selon la direction vers l'avant ;
- une cabine définie par ladite partie avant (3) ;
- un compartiment de charge (5) configuré pour contenir des charges à transporter, supporté par le bas par la partie arrière (4) et possédant un plancher horizontal qui s'étend le long de l'axe (A) droit au-dessus de la partie arrière (4) et est couplé à la partie arrière (4) ;
- une paire de moyeux de roue (13) ; et
- deux paires de roues arrière (10) et deux ensembles d'entraînement (12), qui couplent au moins deux roues arrière (10) des dites deux paires de roues arrière, respectivement, à ladite partie arrière (4), chaque ensemble d'entraînement (12, 12') comprenant :
- un bras de suspension (15, 15') adapté pour être couplé audit châssis (2) dudit véhicule lourd (1) ;
- un arbre (16) porté par ledit bras de suspension (15, 15') de manière rotative autour d'un axe (C) de celui-ci, et comportant une extrémité axiale (17) destinée à être reliée à un moyeu de roue (13) respectif ; et
- un moteur (18) électrique comportant une partie de stator (19), qui est maintenue en position fixe par ledit bras de suspension (15 ; 15'), et une partie de rotor (20), qui est couplée audit arbre (16) pour entraîner ledit arbre (16) en rotation autour dudit axe (C), dans lequel ledit moyeu de roue (13) est monté sur ledit arbre (16), ladite partie de rotor (20) possède un axe de rotor (D ; D') parallèle audit axe (C) et ledit bras de suspension (15, 15') comprend une partie creuse (34, 37 ; 37') qui abrite au moins partiellement ledit moteur (18) et est couplée audit châssis (2) ;
dans lequel ladite partie arrière (4) comprend :
- une structure centrale (4a) qui s'étend le long de l'axe (A) droit, et
- des appendices structurels (4b) faisant saillie depuis ladite structure centrale (4a) transversalement par rapport audit axe (A) droit, l'un à un côté opposé de ladite structure centrale (4a) par rapport à l'autre,
dans lequel chaque ensemble d'entraînement (12, 12') est couplé aux appendices structurels (4b) respectifs de manière directe, étant ainsi espacés de ladite structure centrale (4a) transversalement audit axe (A) et positionnés au même niveau de hauteur ou à un niveau supérieur par rapport à ladite structure centrale (4a),
dans lequel ladite partie creuse (34, 37 ; 37') définit une partie intermédiaire dudit bras de suspension (15, 15'), qui comprend une première et une seconde partie d'extrémité (44, 45) opposées l'une à l'autre par rapport à ladite partie intermédiaire (34) et respectivement adaptées à être couplées audit châssis (2).

2. Véhicule lourd selon la revendication 1, dans lequel ladite partie de rotor (20) est entièrement disposée à l'intérieur de ladite partie creuse (34, 37 ; 37').

3. Véhicule lourd selon la revendication 1 ou 2, dans lequel ledit ensemble d'entraînement comprend au moins un élément de liaison élastique (46) relié à ladite première extrémité (44) et pouvant être relié audit châssis (2) pour coupler ladite première extrémité (44) audit châssis (2).

4. Véhicule lourd selon l'une quelconque des revendications précédentes, dans lequel ladite seconde extrémité (45) s'étend autour d'un axe de charnière (H) ; ladite seconde extrémité (45) étant articulable audit châssis (2) autour dudit axe de charnière (H) ou définissant une barre de torsion élastique fixable audit châssis (2) ;
ledit axe de charnière (H) étant de préférence orienté transversalement par rapport à une direction vers l'avant dudit véhicule lourd (1) lorsque ladite seconde extrémité (45) est couplée audit châssis (2).

5. Véhicule lourd selon l'une quelconque des revendications précédentes, comprenant en outre un dispositif d'étrier de frein (50) et/ou un élément de fixation (51) pour fixer un dispositif d'amortissement au moins partiellement supporté par ladite partie creuse (34, 37 ; 37').

6. Véhicule lourd selon l'une quelconque des revendications précédentes, comprenant en outre une transmission (21, 21'), en particulier avec des engrenages, entièrement logée à l'intérieur de ladite partie creuse (34, 37 ; 37') et couplant ledit arbre (16) à ladite partie de rotor (20).
